# EUROPEAN PATENT APPLICATION

(11) **EP 4 712 214 A1**
(43) Date of publication of application: **18.03.2026**
(21) Application number: 24891769.2
(22) Date of filing: 14.11.2024
(51) Int. Cl.: H01M 10/6568, H01M 10/647, H01M 10/613, H01M 10/04, H01M 10/6567, H01M 10/6555, H01M 50/242, H01M 50/211

(54) **BATTERY ASSEMBLY AND DEVICE INCLUDING SAME**

(30) Priority: 17.11.2023 KR 20230159673; 13.11.2024 KR 20240161140
(71) Applicant: LG Energy Solution, Ltd., Seoul 07335 (KR)
(72) Inventor: CHOI, Shinhwa, Daejeon 34122 (KR)
(74) Representative: Plasseraud IP
(86) International application number: PCT/KR2024/017928
(87) International publication number: WO 2025/105823

(57) **Abstract**

A battery assembly according to certain embodiments of the present disclosure includes: a battery cell stack in which a plurality of battery cells are stacked; a frame that houses the battery cell stack and includes a first side surface part, a second side surface part, a ceiling part, and a bottom part; and an inlet and an outlet for circulating a coolant inside the frame. The coolant is flowed into the inside of the frame through the inlet, and discharged through the outlet. Pad members are disposed on at least at one place between the battery cells, and at least one of the pad members extends from the ceiling part to the bottom part of the frame.

## Description

### [TECHNICAL FIELD]

### Cross-Reference to Related Application(s)

This application claims priority to and the benefit of Korean Patent Application no. KR 10-2023-0159673, filed on November 17, 2023, and Korean Patent Application no. KR 10-2024-0161140, filed on November 13, 2024, with the Korean Intellectual Property Office, the entire contents of which are incorporated herein by reference.

The present disclosure relates to a battery assembly and a device including the same, and more particularly, to a battery assembly having improved cooling efficiency and safety and a device including the same.

### [BACKGROUND]

As technology development and demands for mobile devices have increased, the demand for secondary batteries as energy sources has also rapidly increased. A lot of researches on secondary batteries capable of satisfying various needs have been carried out accordingly.

A secondary battery has attracted considerable attention as an energy source for power-driven devices, such as an electric bicycle, an electric vehicle, and a hybrid electric vehicle, as well as an energy source for mobile devices, such as a mobile phone, a digital camera, and a laptop computer.

Recently, along with a continuous rise of the necessity for a large-capacity secondary battery structure, including the utilization of the secondary battery as an energy storage source, there is a growing demand for a battery pack of a medium or large-sized module structure which is an assembly of battery modules in which a plurality of secondary batteries are connected in series/parallel.

Meanwhile, when a plurality of battery cells are connected in series/parallel to configure a battery pack, it is common to configure a battery module composed of at least one battery cell first and then configure a battery pack by using at least one battery module and adding other components.

Since battery cells constituting such a medium or large-sized battery module are composed of secondary batteries which can be charged and discharged, such a high-output large-capacity secondary battery generates a large amount of heat in a charge and discharge process. In this case, heat generated from the large number of battery cells is added up in a narrow space, so that the temperature can rise more quickly and excessively. In other words, a battery module in which a large number of battery cells are stacked, and a battery pack equipped with such battery modules can obtain high output, but it is not easy to remove heat generated from the battery cells during charging and discharging. When the heat dissipation of the battery cells is not properly performed, deterioration of the battery cells is accelerated, the lifespan is shortened, and the possibility of explosion or ignition increases.

Moreover, in the case of a battery module included in a vehicle battery pack, it is frequently exposed to direct sunlight and may be placed under high-temperature conditions such as summer or desert areas. Further, since a plurality of battery modules are concentratedly disposed to increase the mileage of the vehicle, the flame or heat generated in one battery module can easily propagate to an adjacent battery module, which may eventually lead to ignition or explosion of the battery pack itself.

Furthermore, since the battery pack consists of a structure in which a plurality of battery modules are combined, it is heavy and unsuitable for loading a plurality of batteries into a means of transportation such as an automobile, and therefore it is necessary to improve the energy density.

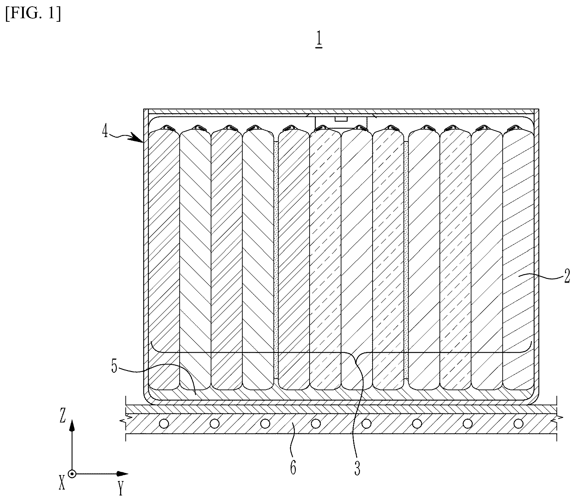

FIG. 1 is a cross-sectional view showing a cross section of a battery pack including a conventional battery module.

Referring to FIG. 1, a conventional battery module 1 includes a battery cell stack 3 including battery cells 2 stacked in a preset direction, and a module frame 4 that houses the battery cell stack 3. Also, a thermally conductive resin layer 5 may be provided between the battery cell stack 3 and the bottom part of the module frame 4. The battery cell stack 3 is fixedly positioned on the thermally conductive resin layer 5. In this case, a heat sink 6 may be provided under the bottom part of the module frame 4 to cool heat generated in the battery cell stack 3. A cooling flow path through which a coolant such as cooling water flows may be formed inside the heat sink 6.

However, the heat sink 6 has the disadvantage in that it does not receive transfer of heat while being in direct contact with the battery cell stack 3, and thus, the cooling efficiency is not very high. In particular, an air gap may be formed between the bottom part of the module frame 4 and the thermally conductive resin layer 5, and between the bottom part of the module frame 4 and the heat sink 6, and this air gap becomes a factor that obstructs heat transfer.

Further, in the case of a conventional battery module 1, only the lower edge portion of the battery cell 2 is in contact with the thermally conductive resin layer 5. The heat generated in the battery cell 2 is discharged sequentially through the thermally conductive resin layer 5 and the heat sink 6 at the lower edge portion of the battery cell 2. That is, the conventional battery module 1 is a type of edge cooling system that discharges heat through the lower edge portion of the battery cells 2. Since this edge cooling system discharges the heat generated in the battery cell 2 only through the narrow lower edge portion, it has a simplified structure, but has the problem that the cooling efficiency is poor.

Taken together, there is a need to provide a more effective method for improving the cooling efficiency of the aggregate formed of the battery cells gathered.

### [DETAILED DESCRIPTION OF THE INVENTION]

### [Technical Problem]

Therefore, it is an object of the present disclosure to provide a battery assembly improved in the cooling efficiency and enhanced in the cooling performance, and a device including the same.

However, the technical objects to be solved by embodiments of the present disclosure are not limited to the above-mentioned objects, and can be variously expanded within the scope of the technical idea included in the present disclosure.

### [Technical Solution]

According certain aspects of the present disclosure, there is provided a battery assembly comprising: a battery cell stack in which a plurality of battery cells are stacked; a frame that houses the battery cell stack and includes a first side surface part, a second side surface part, a ceiling part, and a bottom part; and an inlet and an outlet for circulating a coolant inside the frame, wherein the coolant is flowed into the inside of the frame through the inlet, and discharged through the outlet, wherein pad members are disposed on at least at one place between the battery cells, and wherein at least one of the pad members extends from the ceiling part to the bottom part of the frame.

Flow paths for the coolant separated from each other may be formed between the pad members.

At least one upper end of the pad members may be in close contact with the ceiling part, and at least one lower end of the pad members may be in close contact with the bottom part.

The pad member may have a configuration in which a single pad extends from the ceiling part to the bottom part of the frame.

The pad member may comprise a main pad facing one surface of the battery cell, a first vane sandwiched between the main pad and the ceiling part of the frame, and a second vane sandwiched between the main pad and the bottom part of the frame.

The inlet and the outlet may be positioned on sides opposite to each other with respect to the battery cell stack.

The battery assembly may further comprise a first end plate and a second end plate that cover opened one side and other side of the frame, respectively.

The inlet may be provided in the first end plate, and the outlet may be provided in the second end plate.

The inlet may be positioned lower than the center portion on the basis of the height of the battery cell stack, and the outlet may be positioned higher than the center portion on the basis of the height of the battery cell stack.
wherein in a first direction and a second direction which are opposite to each other while being parallel to the direction in which the battery cells are stacked, the inlet may be positioned so as to be biased in the first direction from the center portion of the battery cell stack in the direction in which the battery cells are stacked, and the outlet may be positioned so as to be biased in the second direction from the center portion of the battery cell stack in the direction in which the battery cells are stacked.

In the battery cell stack, the battery cells may be stacked along a direction from the first side surface part of the frame to the second side surface part of the frame.

The battery cells may be stacked in a state where one surface of the battery cell is parallel to the first side surface part and the second side surface part.

The coolant may be an insulating oil.

The coolant may cool while being in direct contact with the battery cell stack housed inside the frame.

The pad member may be provided in a plurality of numbers, and the plurality of pad members may be disposed at prescribed intervals along the direction in which the battery cells are stacked.

The pad member may be further disposed between the battery cell stack and the first side surface part.

The pad member may be further disposed between the battery cell stack and the second side surface part.

The battery assembly may further comprise cooling fins positioned between the battery cells. The cooling fins may extend to the ceiling part or the bottom part and be contact with the ceiling part or the bottom part.

According certain other aspects of the present disclosure, there is provided a device comprising the battery assembly.

### [Advantageous Effects]

According to certain embodiments of the present disclosure, the coolant can be injected directly into the battery assembly to directly cool the battery cells. As the coolant directly cools the battery cells in this way, it is possible to increase the cooling efficiency of the battery assembly and the device including the same.

In addition, the flow of the coolant can be set uniformly by the pad member disposed between the battery cells within the battery assembly. Thereby, the area where the flow of the coolant stagnates in the battery assembly can be reduced, ultimately allowing for uniform and superior cooling of each battery cell.

The effects of the present disclosure are not limited to those described above, and other effects that are not described herein may clearly be understood by one of ordinary skill in the art from the claims set forth herein.

### [BRIEF DESCRIPTION OF THE DRAWINGS]

FIG. 1 is a cross-sectional view showing a cross section of a battery pack including a conventional battery module.
FIG. 2 is a perspective view showing a battery assembly according to certain embodiments of the present disclosure.
FIG. 3 is an exploded perspective view of the battery assembly of FIG. 2.
FIG. 4 is a perspective view showing a frame included in the battery assembly of FIG. 3.
FIG. 5 is a perspective view showing a battery cell stack, a first busbar assembly and a second busbar assembly included in the battery assembly of FIG. 3.
FIG. 6 is an exploded perspective view of the battery cell stack, the first busbar assembly and the second busbar assembly of FIG. 5.
FIG. 7 is a plan view showing any one of the battery cells included in the battery cell stacks of FIGS. 5 and 6.
FIG. 8 is a plan view showing a state in which the ceiling part of the frame is omitted in a battery assembly according to certain embodiments of the present disclosure, when viewed from above.
FIG. 9 is a front view showing a state in which the first end plate and the first busbar frame are removed in a battery assembly according to certain embodiments of the present disclosure, when viewed from the front.
FIG. 10 is a partially enlarged diagram showing a section "A" of FIG. 9.
FIG. 11 is a perspective view showing a state in which a first sealing assembly according to certain embodiments of the present disclosure is mounted on one side of a frame.
FIGS. 12(a), (b) and (c) are diagrams showing a process in which the first sealing assembly of FIG. 11 is assembled.
FIGS. 13(a), (b) and (c) are diagrams showing a process in which the first sealing assembly of FIG. 11 is mounted on one surface of a frame.
FIG. 14 is an exploded perspective view showing a state in which a first end plate according to certain embodiments of the present disclosure is mounted on the first sealing assembly.
FIG. 15 is a diagram showing a configuration excluding the first end plate in FIG. 14, when viewed along the -x-axis direction on the yz plane.
FIG. 16 is a partially enlarged cross-sectional view showing a portion corresponding to a section "C" in the cross section taken along the cutting line B-B' of FIG. 15.
FIG. 17 is a diagram showing a state in which a second sealing assembly according to certain embodiments of the present disclosure is mounted on the other surface of the frame.
FIG. 18 is an exploded perspective view showing a state in which a second end plate according to certain embodiments of the present disclosure is mounted on the second sealing assembly.
FIG. 19 is a diagram showing a configuration excluding the second end plate in FIG. 18, when viewed along the x-axis direction on the yz plane.
FIG. 20 is a partially enlarged cross-sectional view showing a portion corresponding to a section "E" in the cross section taken along the cutting line D-D' of FIG. 19.
FIG. 21 is an exploded perspective view of a battery cell stack, a first busbar assembly and a second busbar assembly according to modified embodiments of the present disclosure.
FIG. 22 is a front view showing a state in which the first end plate and the first busbar frame are removed in a battery assembly according to modified embodiments of the present disclosure, when viewed from the front.
FIG. 23 is a partially enlarged diagram showing a section "F" of FIG. 22.

### [DETAILED DESCRIPTION OF THE EMBODIMENTS]

Hereinafter, with reference to the accompanying drawings, various embodiments of the present disclosure will be described in detail to the extent that one of ordinary skill in the art can easily practice the present disclosure. The present disclosure may be implemented in various different forms, and is not limited to the embodiments described herein.

In order to clearly describe the present disclosure, descriptions of parts unrelated to the description of the present disclosure will be omitted, and the same or similar components throughout the description will be denoted with the same reference numerals.

Since the drawings arbitrarily illustrate the dimension and thickness of each component for the convenience of description, the present disclosure is not necessarily limited to that illustrated. The drawings depict the thickness in an enlarged scale to clearly show different layers and regions. Further, the drawings exaggerate the thickness of a certain layer or region to facilitate the description thereof.

When a layer, film, region, plate or the like is disposed "on" a specific part, the description includes not only a case where the layer, film, region, plate or the like is disposed "directly on" the specific part, but also a case where the layer, film, region, plate or the like is disposed on the specific part via another part. When a part is disposed "directly on" another part, this indicates that no new component is present between the two parts. Further, when a component is disposed "on" a reference part, this indicates that the component is present at the top of or under the reference part, and does not necessarily indicate that the component is disposed only at the top of the reference part, which is opposite to the direction of gravity.

Throughout the descriptions herein, when a certain part "includes" a component, this does not indicate that the certain part excludes other components, but indicates that the part may further include other components, unless otherwise defined.

Throughout the descriptions herein, the terms "in a plan view" indicate viewing an object from above, and the terms "in a cross-sectional view" indicate viewing a vertical cross section of an object from side.

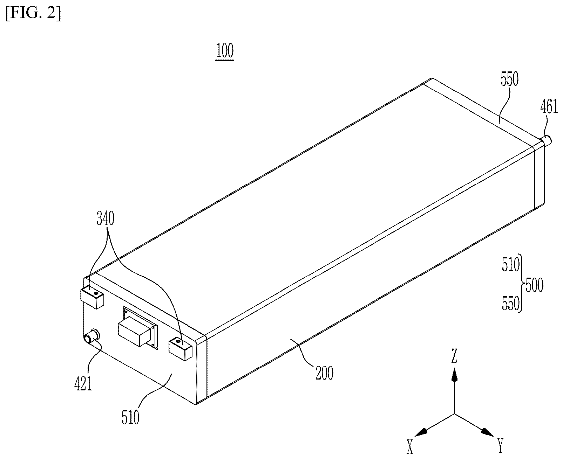

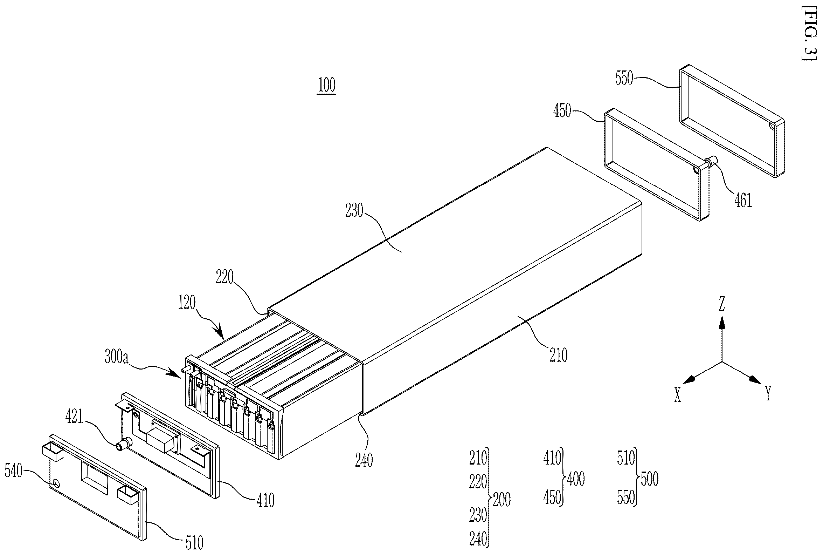

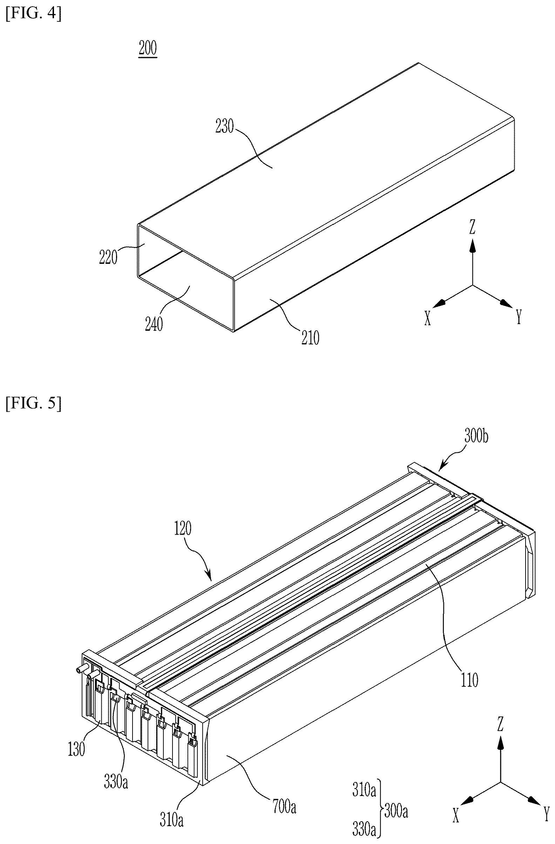

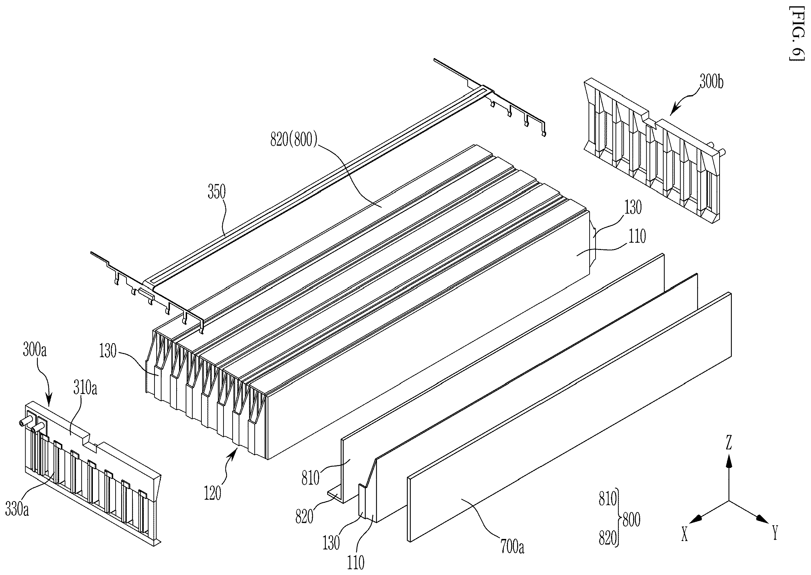

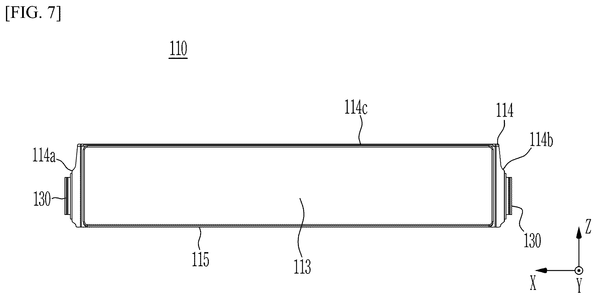

FIG. 2 is a perspective view showing a battery assembly according to certain embodiments of the present disclosure. FIG. 3 is an exploded perspective view of the battery assembly of FIG. 2. FIG. 4 is a perspective view showing a frame included in the battery assembly of FIG. 3. FIG. 5 is a perspective view showing a battery cell stack, a first busbar assembly and a second busbar assembly included in the battery assembly of FIG. 3. FIG. 6 is an exploded perspective view of the battery cell stack, the first busbar assembly and the second busbar assembly of FIG. 5. FIG. 7 is a plan view showing any one of the battery cells included in the battery cell stacks of FIGS. 5 and 6.

Referring to FIGS. 2 to 7, a battery assembly 100 according to certain embodiments of the present disclosure includes: a battery cell stack 120 in which a plurality of battery cells 110 are stacked; a frame 200 that houses the battery cell stack 120 and includes a first side surface part 210, a second side surface part 220, a ceiling part 230 and a bottom part 240; and an inlet 421 and an outlet 461 for circulating a coolant inside the frame 200. The coolant is flowed into the frame 200 through the inlet 421, and discharged through the outlet 461. The details of the coolant, the inlet 421 and the outlet 461 will be described later.

The battery cell 110 according to the present embodiments may be various types of battery cells, for example, a pouch-type battery cell, a prismatic battery cell, or a cylindrical battery cell. As an example, as shown in FIG. 7, the battery cell 110 according to the present embodiments may be a pouch-type battery cell. Below, a pouch-type battery cell will be described, but the battery cell 110 according to the present embodiments is not limited thereto, and various types of battery cells may be applied.

The battery cell 110 according to the present embodiments may have a configuration in which an electrode assembly having electrode leads 130 protruding in one direction or both directions is housed in a pouch case 114. The battery cell 110 may be in the form of a rectangular sheet. The battery cell 110 may be formed by housing the electrode assembly in a pouch case 114 made of a laminate sheet including a resin layer and a metal layer, and then bonding the outer peripheral part of the pouch case 114. In certain embodiments, the battery cell 110 may have a structure in which two electrode leads 130 face each other and protrude from one end 114a and the other end 114b of the cell body 113, respectively. In certain other embodiments, a structure in which both the electrode leads 130 of the battery cell 110 protrude together in one direction can also be used. One of the electrode leads 130 is a positive electrode lead, and the other is a negative electrode lead.

The battery cell 110 can be produced by adhering both ends 114a and 114b of a battery case 114 and one side part 114c connecting them in a state in which an electrode assembly (not shown) is housed in a battery case 114. In other words, the battery cell 110 according to certain embodiments of the present disclosure has a total of three sealing parts, wherein the sealing parts have a structure that is sealed by a method such as fusion, and the remaining other one side part may be composed of a folding part 115. That is, the battery cell 110 according to the present embodiments may be a pouch-type secondary battery in which the electrode assembly is housed inside the battery case 114 and the outer peripheral side of the battery case 114 is sealed to form a sealing part. In FIG. 7, only a state in which the sealing parts are formed at both ends 114a and 114b of the battery case 114 are shown, and the sealing part is not shown on the side facing the folding part 115, however, the sealing part on the side facing the folding part 115 may be in a state being folded to one side after sealing is completed for space utilization.

The battery case 114 of the laminate sheet may include an inner resin layer for sealing, a metal layer for preventing penetration of materials, and an outer resin layer positioned on the outermost side. Based on the electrode assembly inside the battery case 114, the inner resin layer may be positioned on the innermost side, the outer resin layer may be positioned on the outermost side, and the metal layer may be positioned between the inner resin layer and the outer resin layer.

The outer resin layer has excellent tensile strength and weather resistance relative to the thickness and can exhibit electrical insulation properties in order to protect the electrode assembly from the outside. Such an outer resin layer may include a polyethylene terephthalate (PET) resin or a nylon resin. The metal layer can prevent air, moisture, and the like from flowing into the pouch-type secondary battery. This metal layer may include aluminum (Al). The inner resin layers may be thermally fused to each other by heat and/or pressure applied in a state in which the electrode assembly is embedded. This inner resin layer may include casted polypropylene (CPP) or polypropylene(PP).

The pouch case 114 is divided into two portions, and a concave-shaped housing part in which the electrode assembly can be seated may be formed in at least one of the two portions. Along the outer circumference of this housing part, the inner resin layers of the two portions of the pouch case 114 may be joined to each other to provide a sealing part. The pouch case is sealed in this manner, so that the battery cell 110, which is a pouch-type secondary battery, can be produced.

Within the battery cell stack 120, the battery cells 110 may be configured in a plurality of numbers, and the plurality of battery cells 110 may be stacked so as to be electrically connected to each other. As an example, the plurality of battery cells 110 may be stacked along a direction parallel to the Y-axis in a standing upright state. Specifically, in the battery cell stack 120, the battery cells 110 may be stacked along the direction from the first side surface part 210 to the second side surface part 220 of the frame 200. The battery cells 110 may be stacked in a state where one surface of the battery cell 110 is parallel to the first side surface part 210 and the second side surface part 220. Here, the one surface of the battery cell 110 may be one surface of the cell body 113 (see FIG. 7) of the battery cell 110. The electrode leads 130 may protrude in a direction perpendicular to the direction in which the battery cells 110 are stacked. In the battery cell 110, one electrode lead 130 may protrude toward the X-axis direction, and the other electrode lead 130 may protrude toward the -X-axis direction. If the electrode leads 130 are battery cells that protrude only in one direction, the electrode leads 130 may protrude in the X-axis direction or the -X-axis direction.

The frame 200 may be intended to protect the battery cell stack 120 and the electrical components connected thereto from external physical impact. The frame 200 is a member for forming a space in which the battery cells 110 are housed, and may cover at least a part of the battery cell stack 120. As mentioned above, the frame 200 includes a first side surface part 210, a second side surface part 220, a ceiling part 230, and a bottom part 240. The battery cell stack 120 and the electrical components connected thereto may be housed in the internal space of the frame 200, that is, the internal space formed by the first side surface part 210, the second side surface part 220, the ceiling part 230, and the bottom part 240. The material of the frame 200 is not particularly limited, but as an example, the frame 200 may include a metal material.

The structure of the frame 200 may have various shapes. According to certain embodiments of the present disclosure, the structure of the frame 200 may be a mono-frame structure. Here, the mono-frame may be in the form of a metal plate in which the upper surface, lower surface, and both side surface are integrated. The mono-frame may be manufactured by extrusion molding. In the case of this example, the first side surface part 210, the second side surface part 220, the ceiling part 230, and the bottom part 240 may be integrated.

However, the structure of the frame 200 is not limited thereto, and in certain other embodiments, the frame 200 may be a structure in which constituent components are connected to each other. For example, at least one of the first side surface part 210, the second side surface part 220, the ceiling part 230 or the bottom part 240 may be a separate component that is distinct from each other, and these separate components may be coupled to each other by a mechanical fastening method or welding, etc. In the case of this example, the frame 200 may be formed while at least one of the first side surface part 210, the second side surface part 220, the ceiling part 230 or the bottom part 240 is being coupled by a mechanical fastening method or welding, etc.

As an example, the frame 200 may have a U-shaped frame and an upper plate that are coupled to each other. In this case, the U-shaped frame may have two side surfaces extending upward from the lower surface and both edges of the lower surface, and the upper plate may be in the form of a plate. Here, the U-shaped frame may be a part corresponding to the first side surface part 210, the second side surface part 220 and the bottom part 240, and the upper plate may be a part corresponding to the ceiling part 230. At this time, each frame or plate constituting the U-shaped frame may be manufactured by press forming. In addition, the structure of the frame 200 may be provided as an L-shaped frame structure in addition to a mono-frame or a U-shaped frame, and may be provided in various structures not described in the above-mentioned examples.

That is, taken together, the frame 200 of the present disclosure can be provided in various structures without any separate restrictions on the shape, material, preparation method, and coupling form between constituent components, as long as it can form a space in which the battery cells 110 are housed.

The frame 200 may have the form that is opened on both sides. More specifically, the frame 200 may be provided in the form that is opened along the longitudinal direction of the battery cells 110. Here, the longitudinal direction of the battery cells 110 is a direction perpendicular to the direction in which the battery cells 110 are stacked, and may correspond to the direction in which the electrode leads 130 protrude from the battery cells 110. Opened both sides of the frame 200 may be covered by first and second busbar assemblies 300a and 300b, a sealing assembly 400, an end plate 500 or the like which will be described later. The battery cell stack 120 may be housed in the internal space of the frame 200, thereby being protected from external physical impacts, etc.

Meanwhile, the battery assembly 100 may include a first busbar assembly 300a and a second busbar assembly 300b that are positioned on one side and the other side of the battery cell stack 120, respectively. Specifically, the first busbar assembly 300a and the second busbar assembly 300b may be positioned in the direction in which the electrode leads 130 of the battery cells 110 included in the battery cell stack 120 protrude. The first busbar assembly 300a and the second busbar assembly 300b may include a busbar frame, a busbar, a terminal busbar, and the like, respectively, which will be described below.

Meanwhile, the battery assembly 100 may include a sealing assembly 400. The sealing assembly 400 may be positioned on opened both sides of the frame 200 and formed to cover the battery cell stack 120. The sealing assembly 400 positioned on the opened side of the frame 200 may be a first sealing assembly 410, and the sealing assembly 400 positioned on the opened other side of the frame 200 may be a second sealing assembly 450. That is, the battery assembly 100 according to the present embodiments may further include a first sealing assembly 410 and a second sealing assembly 450 that cover the opened both sides of the frame 200, respectively.

The sealing assembly 400 may separate the opened both sides of the frame 200 from the external environment. Specifically, when the coolant is injected into the frame 200 described below, the sealing assembly 400 can serve to seal so that the coolant does not leak to the outside.

The battery assembly 100 according to the present embodiments may include end plates 500 positioned on the opened both sides of the frame 200. Specifically, the end plates 500 may be positioned on the opened both sides of the frame 200 and formed to cover the sealing assembly 400. The battery assembly 100 may include a first end plate 510 and a second end plate 550 that cover the opened one side and the opened other side of the frame 200, respectively. That is, the end plate 500 positioned on the opened one side of the frame 200 may be a first end plate 510, and the end plate 500 positioned on the opened other side of the frame 200 may be a second end plate 550. The first end plate 510 can cover the first sealing assembly 410 from the outside, and the second end plate 550 can cover the second sealing assembly 450 from the outside. In other words, the first sealing assembly 410 can be positioned between the battery cell stack 120 and the first end plate 510, and the second sealing assembly 450 can be positioned between the battery cell stack 120 and the second end plate 550. The material of the end plate 500 is not particularly limited, but as an example, the end plate 500 may include a metal material, and can be welded and joined to the frame 200. The end plate 500 can physically protect the battery cell stack 120 and other electrical components from external impact.

The structure of a pad member 700a, a cooling fin 800, and the like according to certain embodiments of the present disclosure will be described in detail below.

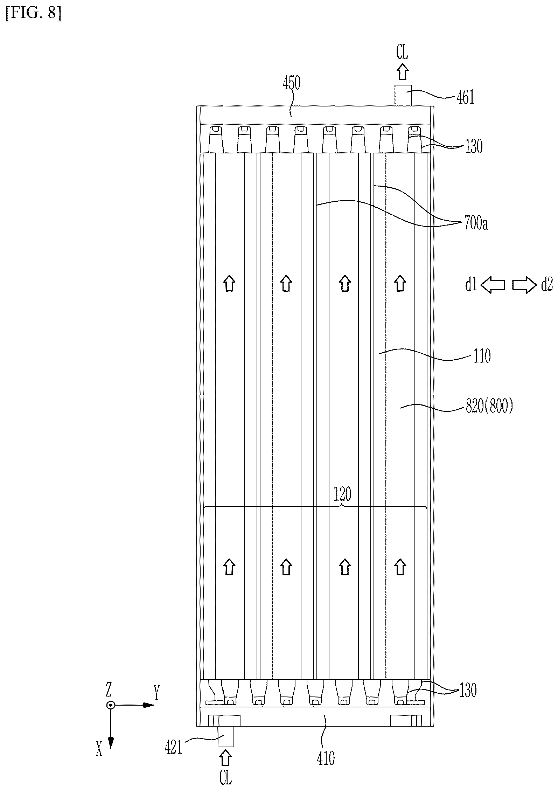

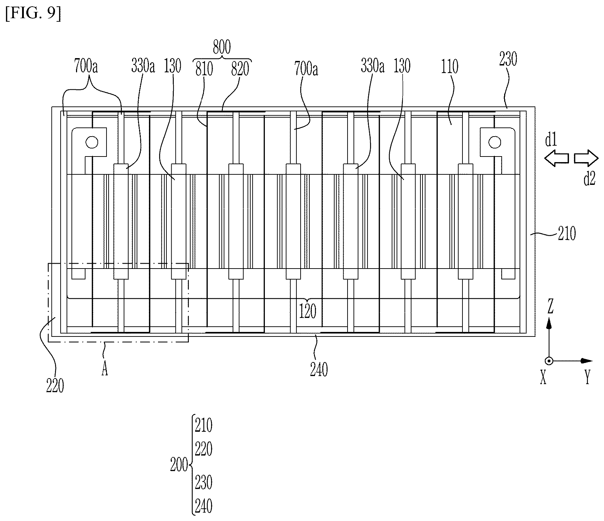

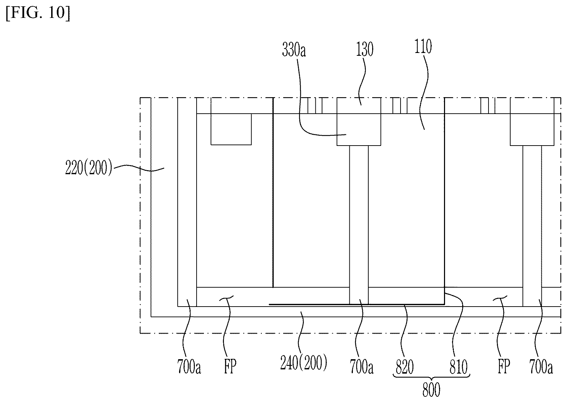

FIG. 8 is a plan view showing a state in which the ceiling part of the frame is omitted in a battery assembly according to certain embodiments of the present disclosure, when viewed from above. FIG. 9 is a front view showing a state in which the first end plate and the first busbar frame are removed in a battery assembly according to certain embodiments of the present disclosure, when viewed from the front. FIG. 10 is a partially enlarged diagram showing a section "A" of FIG. 9.

Referring to FIGS. 3, 6, 8, 9 and 10, in the battery assembly 100 according to the present embodiments, the pad members 700a are disposed on at least one place between the battery cells 110. Further, the pad members 700a may be provided in a plurality of numbers, and the plurality of pad members 700a may be disposed at prescribed intervals along the direction in which the battery cells 110 are stacked. Further, a separate pad member 700a may be further disposed between the battery cell stack 120 and the first side surface part 210. Further, a separate pad member 700a may be further disposed between the battery cell stack 120 and the second side surface part 220.

The pad member 700a according to the present embodiments may be a plate-shaped member in the form of a foam. When the battery cells 110 are swelled by charging and discharging, the pad member 700a may serve to absorb the swelling. Specifically, as the battery cells 110 are repeatedly charged and discharged, gas may be generated inside due to deterioration or the like. Further, when gas is generated inside in this manner, the internal pressure increases, thereby causing a swelling phenomenon in which at least a part of the outer material swells up. In particular, in the case of a pouch-type secondary battery, the structural rigidity of the outer material is weaker than that of a can-type secondary battery, and thus the swelling phenomenon may occur more severely. If the swelling of the battery cell 110 is not absorbed and controlled, the structural deformation may occur in the battery assembly 100 having the form in which a plurality of battery cells 110 are stacked, which may also adversely affect the durability and performance of the battery assembly 100. The pad member 700a according to the present embodiments may absorb swelling phenomena of the battery cell 110 while being compressed in response to the battery cell 110 in which swelling has occurred, ultimately minimizing the structural deformation of the battery assembly 100. The pad member 700a is not particularly limited in its material as long as it can absorb the swelling of the battery cell 110 when compressed, and may include, for example, a polyurethane material.

Meanwhile, the battery assembly 100 according to the present embodiments may further include cooling fins 800 positioned between the battery cells 110. The cooling fin 800 may be positioned between two battery cells 110. For example, as shown in FIG. 9, one cooling fin 800 and the other cooling fin 800 adjacent thereto may be positioned with two battery cells 110 between them.

The cooling fin 800 according to the present embodiments may extend to the ceiling part 230 or the bottom part 240 of the frame 200, and may come into contact with the ceiling part 230 or the bottom part 240. Specifically, the cooling fin 800 may include a main body 810 that makes contact with one surface of the battery cell 110. Here, one surface of the battery cell 110 may be one surface of the cell body 113 (see FIG. 7) of the battery cell 110, which may be one surface of the battery cell 110 that extends along the longitudinal direction (x-axis direction).

One surface of the main body 810 may make contact with one surface of the battery cell 110 facing one surface of the main body 810. The other surface of the main body 810 can make contact with one surface of the other adjacent battery cell 110 facing the other surface of the main body 810. In this case, although not specifically shown in the figure, an adhesive member is interposed between one surface of the battery cell 110 and the main body 810, so that the battery cell 110 and the main body 810 can be adhesively fixed. For example, the adhesive member can be an insulating tape.

When the size of the main body 810 is larger than the size of the battery cell 110, the upper part and the lower part of the battery cell 110 can be positioned while having a certain distance from the ceiling 230 and the bottom part 240 of the frame 200. Specifically, when the height of the main body 810 is longer than the height of the battery cell 110, the battery cell 110 may be adhesively fixed while being positioned in the center portion of the main body 810. In this case, the upper part and the lower part of the battery cell 110 may be positioned while having a certain distance from the ceiling part 230 and the bottom part 240 of the frame 200. Here, the height of the battery cell 110 and the main body 810 may correspond to the length in the z-axis direction.

The cooling fin 800 may further include an extension part 820 extending from one end of the main body 810. As an example, the cooling fin 800 may be L-shaped. Specifically, the cooling fin 800 may include a main body 810 facing one surface of the battery cell 110, and an extension part 820 extending from one end of the main body 810 along the direction in which the battery cells 110 are stacked (a direction parallel to the Y axis). One surface of the extension part 820 may be parallel to the direction in which the battery cells 110 are stacked. Further, one surface of the extension part 820 may be perpendicular to one surface of the main body 810.

The extension part 820 may make contact with the ceiling part 230 or the bottom part 240 of the frame 200. Specifically, one surface of the extension part 820 may face the upper surface or the lower surface of the battery cell 110, and the other surface of the extension part 820 may make contact with the ceiling part 230 or the bottom part 240 of the frame 200.

For example, in any of the cooling fins 800, one surface of the extension part 820 may face a lower surface of the battery cell 110, and the other surface of the extension part 820 may make contact with the bottom part 240 of the frame 200. Thereby, the cooling fin 800 may be fixedly positioned within the frame 200. In addition, in the other cooling fins 800, one surface of the extension part 820 may face the upper surface of the battery cell 110, and the other surface of the extension part 820 may be in contact with the ceiling part 230 of the frame 200. Meanwhile, the upper surface and the lower surface of the battery cell 110 may be positioned by being adhesively fixed to the main body 810 while having a certain height from the ceiling part 230 and the bottom part 240 of the frame 200.

However, the shape of the cooling fin 800 is not limited to that shown in the figure, and may be a flat plate shape, and any shape may be possible as long as it can fix the battery cell 110 while making contact with the battery cell 110.

The cooling fin 800 according to the present embodiments may include a metal material. Specifically, the cooling fin 800 may include a metal material having high thermal conductivity. Therefore, the cooling fin 800 can directly receive transfer of heat generated in the battery cell 110 during charging and discharging. When heat is generated, the heat is primarily cooled while being transferred to the cooling fin 800 that makes contact with one surface of the battery cell 110, and the coolant described below can be secondarily cooled by making direct contact with the upper part and the lower part of the battery cell 110. As a result, direct cooling can be made also to the upper and lower areas of the battery cell which were conventionally relatively difficult to cool, thereby improving the cooling efficiency.

Next, a structure for circulating a coolant inside a battery assembly 100 according to the present embodiment will be described in detail.

Referring again to FIGS. 2, 3, 6, 8, 9 and 10, the coolant flows into the frame 200 through the inlet 421, and then discharged to the outside of the battery assembly 100 through the outlet 461, as mentioned above. In the present embodiments, the coolant can cool while making direct contact with the battery cell stack 120 housed inside the frame 200. More specifically, the coolant can make direct contact with the battery cell stack 120 housed inside the frame 200, the first and second busbar assemblies 300a and 300b described below and other electrical components, and receive transfer of heat generated from them. That is, the battery assembly 100 according to the present embodiments can have a direct cooling structure in which the coolant directly flow and circulates inside the frame 200 to cool the battery cells 110 and electrical components. Therefore, as compared with a conventional battery module 1 (see FIG. 3) that indirectly cools the battery module 1 using a heat sink 6, the battery assembly 100 according to the present embodiments can improve the cooling efficiency by direct cooling, thereby extending a lifetime of the battery.

The coolant may be a fluid. However, since the coolant makes direct contact with the battery cell stack 120, the first and second busbar assemblies 300a and 300b, and other electrical components within the battery assembly 100, the coolant needs to be electrically insulated. Therefore, the coolant may be a material having insulating properties. As an example, the coolant may be an insulating oil.

Meanwhile, in the battery assembly 100 according to the present embodiments, the inlet 421 and the outlet 461 may be positioned on sides opposite to each other with respect to the battery cell stack 120. In other words, the battery cell stack 120 may be positioned between the inlet 421 and the outlet 461. Further, the inlet 421 may be provided in the first end plate 510, and the outlet 461 may be provided in the second end plate 550. The inlet 421 being provided in the first end plate 510 includes all cases where the inlet 421 is formed integrally with the first end plate 510, or where the inlet 421 passes through an inlet opening 540 formed in the first end plate 510 and is exposed to the outside of the first end plate 510. Similarly, the outlet 461 being provided on the second end plate 550 includes all cases where the outlet 461 is formed integrally with the second end plate 550 or where the outlet 461 passes through an outlet opening 560 formed on the second end plate 550 and is exposed to the outside of the second end plate 550.

In the case of the battery assembly 100 according to the present embodiments, the coolant CL can directly cool the battery cell stack 120, the first and second busbar assemblies 300a and 300b, and other electrical components while flowing along the longitudinal direction (parallel to the X-axis) of the battery cell 110. As mentioned above, in the battery cell stack 120, the battery cells 110 may be stacked along the direction from the first side surface part 210 to the second side surface part 220 of the frame 200 in a state where one surface of the battery cell 110 is parallel to the first surface 210 and the second surface 220. In the stacked form of the battery cell stack 120, the coolant CL is designed to flow along the longitudinal direction of the battery cells 110, so that the coolant CL is not biased to some of the battery cells 110 and can evenly cool the battery cells 110. If the coolant is designed to flow along the stacking direction of the battery cells 110, the flow of the coolant may not be smooth, and only some of the battery cells 110 may be cooled, which may cause a cooling imbalance.

Meanwhile, at least one of the pad members 700a according to the present embodiments extends from the ceiling part 230 to the bottom part 240 of the frame 200. The coolant flow paths FP separated from each other may be formed between the pad members 700a. In the case of a direct cooling structure as in the present embodiments, since the battery cells 110 are directly cooled by the coolant, the cooling performance is high, but an area where the flow of the coolant stagnates may occur inside the frame 200, which may cause a cooling imbalance. In particular, an area where the flow of the coolant stagnates may occur in an area between the second end plate 550 where the outlet 461 is positioned and the battery cell stack 120. In particular, the area between the second end plate 550 and the battery cell stack 120 is a place where the electrode lead 130 of the battery cell 110 or the second busbar 330b described below is positioned, wherein the electrode lead 130 or the second busbar 330b is a portion where a great amount of heat particularly occurs during the charging and discharging of the battery cell 110. Therefore, the stagnation of the flow of the coolant in the corresponding area may deepen the cooling imbalance inside the battery assembly 100, and this cooling imbalance may become a factor that causes the performance deterioration and degradation of the battery cells 110.

In order to solve this problem of stagnation of the flow of the coolant, the present embodiments are configured such that the pad members 700a extending from the ceiling part 230 to the bottom part 240 of the frame 200 are provided, and a coolant flow path FP is realized through the pad members 700a.

Conventionally, since the coolant randomly flows through a wide space inside the frame 200 from the inlet 421 to the outlet 461, an area where the flow of the coolant stagnates occurs. On the other hand, as in the present embodiments, when the pad members 700a are extended and a coolant flow path FP is realized between the pad members 700a, the coolant flows smoothly from the inlet 421 to the outlet 461 along the flow path FP, and no stagnation of the flow of the coolant occurs. In FIG. 8, when the coolant CL flows inside the frame 200 from the inlet 421 to the outlet 461, the coolant CL can flow without stagnation through the space between the pad members 700a, as indicated by the arrow. As a result, in the case of the battery assembly 100 according to the present embodiments, since the stagnation of the flow of the coolant and the cooling imbalance resulting therefrom are minimized, the problem of performance deterioration and deterioration of the battery cells 110 can be prevented. That is, in addition to the function of absorbing the swelling of the battery cells 110, the pad member 700a in the present embodiments can also perform a function to form a flow path FP of the coolant and eliminate the stagnation of the flow of the coolant and the cooling imbalance resulting therefrom.

FIG. 10 shows a case where a coolant flow path FP is formed between pad members 700a in the area between the battery cells 110 and the bottom part 240 of the frame 200. Although not specifically enlarged, the coolant flow path FP may be formed between the pad members 700a in the area between the battery cells 110 and the ceiling part 230 of the frame 200. Meanwhile, if the pad member 700a is not disposed on the outermost side of the battery cell stack 120, a coolant flow path may be formed between one of the pad members 700a and the first side surface part 210 and between the other of the pad members 700a and the second side surface part 220.

The upper end of at least one of the pad members 700a may be in close contact with the ceiling part 230 of the frame 200, and the lower end of at least one of the pad members 700a may be in close contact with the bottom part 240 of the frame 200. In addition, the upper end or the lower end of some of the pad members 700a may be in close contact with the extension part 820 of the cooling fin 800, as shown in FIGS. 9 and 10. The upper end or the lower end of some pad members 700a may be in close contact with one surface of the extension part 820, and the other surface of the extension part 820 may be in close contact with the ceiling part 230 or the bottom part 240 of the frame 200. In other words, in order to clearly form a coolant flow path FP between the pad members 700a, it is preferable that no separate space exist between the upper end of the pad members 700a and the ceiling part 230 of the frame 200, and no separate space exist between the lower end of the pad members 700a and the bottom part 240 of the frame 200.

Meanwhile, the pad member 700a according to certain embodiments of the present disclosure may have the form in which a single pad extends from the ceiling part 230 of the frame 200 to the bottom part 240 of the frame 200. That is, the pad member 700a according to the present embodiments may be a single pad, rather than being divided into several members.

The inlet 421 may be positioned lower than the center portion on the basis of the height of the battery cell stack 120. The outlet 461 may be positioned higher than the center portion on the basis of the height of the battery cell stack 120. Here, the height of the battery cell stack 120 refers to the length in the z-axis direction in the drawing. The positions of the inlet 421 and the outlet 461 are not limited thereto, however, if the positions of the inlet 421 and the outlet 461 are set as described above, the inside of the frame 200 can be made to be sufficiently filled with the coolant.

If the inlet 421 is positioned higher than the center portion on the basis of the height of the battery cell stack 120, the coolant flows into the battery assembly 100 as if it is falling from a high position, so that bubbles are likely to occur inside the coolant. Such bubbles may become a factor that inhibits the cooling effect.

In addition, if the outlet 461 is positioned lower than the center portion on the basis of the height of the battery cell stack 120, the coolant flowing into the battery assembly 100 is filled only up to the height of the outlet 461 and flows out to the outside, the inside of the battery assembly 100 is not filled with a sufficient amount of coolant, which may result in a decrease in cooling performance.

Therefore, in order to prevent bubbles from being generated in the inflowing coolant and to cool the entire inside of the battery assembly 100 while the inside being gradually filled with coolant, it is preferable that the inlet 421 is positioned lower than the center portion on the basis of the height of the battery cell stack 120, and the outlet 461 is positioned higher than the center portion on the basis of the height of the battery cell stack 120.

Meanwhile, as shown in FIGS. 8 and 9, in a first direction d1 and a second direction d2 which are opposite to each other while being parallel to the direction in which the battery cells 110 are stacked, the inlet 421 may be positioned so as to be biased in the first direction d1 from the center portion of the battery cell stack 120 in the direction in which the battery cells 110 are stacked, and the outlet 461 may be positioned so as to be biased in the second direction d2 from the center portion of the battery cell stack 120 in the direction in which the battery cells are stacked. That is, the inlet 421 and the outlet 461 are preferably positioned on sides opposite to each other on the basis of the direction in which the battery cells 110 are stacked. The inlet 421 and the outlet 461 should be disposed in this manner, so that the coolant can evenly cool all the battery cells 110 while flowing throughout the entire space inside the frame 200. If the inlet 421 and the outlet 461 are positioned together at the center portion of the battery cell stack 120 in the direction in which the battery cells 110 are stacked, the coolant will only flow to the center portion, which is the portion with minimum flow resistance, so that the coolant does not flow well to the battery cells 110 positioned on the outer part of the battery cell stack 120. Ultimately, this causes a cooling imbalance inside the battery assembly 100. In addition, if the inlet 421 and the outlet 461 are positioned so as to be biased toward only one of the first direction d1 or the second direction d2, the coolant will flow only to some of the outer battery cells 110 adjacent to each other in the biased direction, which will also cause a cooling imbalance inside the battery assembly 100. Therefore, in order to induce the coolant to flow evenly to all of the battery cells 110 inside the battery assembly 100, as mentioned above, the inlet 421 and the outlet 461 are preferably positioned on sides opposite to each other on the basis of the direction in which the battery cells 110 are stacked.

Referring again to FIGS. 3, 5 and 6, the battery assembly 100 may include a first busbar assembly 300a and a second busbar assembly 300b that are respectively positioned on one side and the other side of the battery cell stack 120, as mentioned above.

The first busbar assembly 300a may include a first busbar frame 310a, and a first busbar 330a mounted on the first busbar frame 310a.

The first busbar frame 310a may be positioned on one surface of the battery cell stack 120 to cover one surface of the battery cell stack 120 and at the same time, guide the connection between the battery cell stack 120 and an external device.

The first busbar 330a may be mounted on the first busbar frame 310a. In specific examples, the inner surface of the first busbar frame 310a may face the battery cell stack 120, and a first busbar 330a may be mounted on the outer surface of the first busbar frame 310a.

The first busbar frame 310a may include an electrically insulating material. The first busbar frame 310a restricts the first busbar 330a from making contact with other portions of the battery cell 110 other than the portion where the first busbar 330a is joined to the electrode lead (not shown), thereby preventing the occurrence of an electrical short circuit.

The first busbar 330a may be mounted on the outer surface of the first busbar frame 310a, and may electrically connect the battery cells 110 included in the battery cell stack 120 and electrically connect the battery cell stack 120 to an external device circuit. The first busbar 330a is positioned on the first busbar frame 310a, and the first busbar assembly 300a is covered by a sealing assembly 400 and an end plate 500 described below, thereby being able to protect from external impacts and the like, and minimizing the deterioration of durability due to external moisture or the like.

The first busbar 330a may be electrically connected to the battery cell stack 120 through the electrode lead 130 of the battery cell 110. Specifically, the electrode lead 130 of the battery cell 110 may be bent after passing through a slit formed in the first busbar frame 310a, and connected to the first busbar 330a. The battery cells 110 included in the battery cell stack 120 may be connected in series or parallel by the first busbar 330a. The method of connection between the electrode lead 130 and the first busbar 330a is not particularly limited, and weld-joining can be applied as an example.

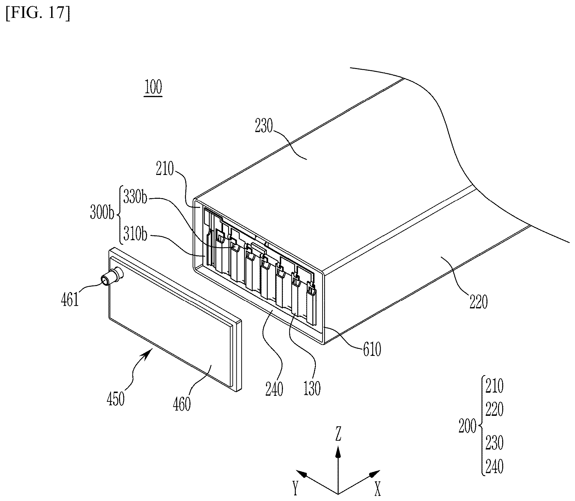

The second busbar assembly 300b can cover the other side of the battery cell stack 120 and at the same time, electrically connect the battery cells 110 of the battery cell stack 120. The detailed configuration of the second busbar assembly 300b will be described again with reference to FIG. 17.

Meanwhile, a flexible printed circuit board (FPCB) 350 may be provided to electrically connect the first busbar assembly 300a and the second busbar assembly 300b. The flexible printed circuit board 350 is mounted to extend in the longitudinal direction of the battery cell 110, and configured to sense the battery cell 110. That is, as shown in FIG. 6, the flexible printed circuit board 350 senses voltage data and thermal data of the battery cells 110 while being positioned on the upper surface of the battery cell stack 120. In particular, the flexible printed circuit board 350 can be electrically connected to the first busbar 330a while being bent at one end toward the first busbar frame 310a. Thereby, it is possible to sense the voltage data of respective battery cells 110 and transmit them to the outside.

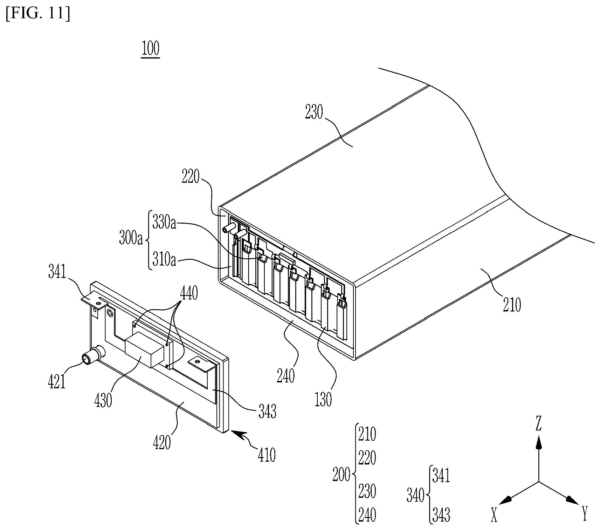

FIG. 11 is a perspective view showing a state in which a first sealing assembly according to certain embodiments of the present disclosure is mounted on one side of a frame.

Referring to FIGS. 2, 3, 6, 7 and 11, the battery assembly 100 may include a first sealing assembly 410 and a second sealing assembly 450 that cover the opened both sides of the frame 200, respectively, as mentioned above. The inlet 421 may be formed in the first sealing assembly 410, and the outlet 461 may be formed in the second sealing assembly 450. However, this is an exemplary structure, and in certain other embodiments of the present disclosure, the inlet and the outlet may be formed in the first end plate 510 and the second end plate 550, respectively.

As mentioned above, when the direction parallel to the direction in which the electrode lead 130 protrudes from the battery cell 110 is referred to as the longitudinal direction of the battery cell 110, the direction parallel to the X-axis may correspond to the longitudinal direction of the battery cell 110. The first sealing assembly 410, the first busbar assembly 300a, the battery cell stack 120, the second busbar assembly 300b, and the second sealing assembly 450 may be disposed in this order along the longitudinal direction. That is, the coolant flowing in through the inlet 421 formed in the first sealing assembly 410 may pass through the first busbar assembly 300a, the battery cell stack 120 and the second busbar assembly 300b, and be discharged through the outlet 461 formed in the second sealing assembly 450.

The first sealing assembly 410 can be mounted while covering the first busbar assembly 300a. The first sealing assembly 410 may include a first sealing cover 420 which is a plate covering an opened surface of the frame 200, an inlet 421 which is a hole formed in the first sealing cover 420, and a module connector 430 which is mounted on an area of the first sealing cover 420.

The first sealing cover 420 is a plate covering an opened surface of the frame 200, and may have a size corresponding to the size of the opened surface of the frame 200. That is, the first sealing cover 420 may be mounted on the frame 200 while covering the opened surface of the frame 200. As an example, the first sealing cover 420 can be fitted into the frame 200.

The inlet 421 may be a hole formed in one area of the first sealing cover 420. The inlet 421 may be a hole formed to protrude from the outer surface (X-axis direction) of the first sealing cover 420. That is, the inlet 421 may be a hole formed to protrude in a direction opposite to the direction in which the frame 200 is positioned on the basis of the first sealing cover 420. The inlet 421 having a protruding form may pass through the inlet opening 540 formed in the first end plate 510 described below.

The inlet 421 may be positioned lower than the center portion on the basis of the height of the battery cell stack 120. The inlet 421 may be positioned close to the lower end of the first sealing assembly 410. Specifically, the inlet 421 may be positioned lower than the center portion on the basis of the height of the first sealing assembly 410.

The module connector 430 may detect phenomena such as overvoltage, overcurrent, and overheating of the battery cell and control them. The module connector 430 is for LV (low voltage) connection, and voltage information and temperature information of the battery cell may be transmitted to an external BMS (Battery Management System) through the module connector 430.

The module connector 430 may be mounted on the first sealing cover 420. At this time, the module connector 430 may be coupled and mounted to the first sealing cover 420 through a coupling member 440. At least a part of the module connector 430 may be exposed to the outside of the first end plate 510 described below, and the first end plate 510 may be provided with a module connector opening 530 for this purpose.

The first sealing cover 420 may be provided with a terminal busbar 340. The terminal busbar 340 may include a first terminal busbar 341 and a second terminal busbar 343, wherein the first terminal busbar 341 and the second terminal busbar 343 may have different polarities from each other.

The terminal busbar 340 may be electrically connected to the busbar or the electrode lead, and may be for electrically connecting one battery assembly 100 to another battery assembly 100. In order to connect one battery assembly 100 to another external battery assembly 100, at least a part of the terminal busbar 340 may be exposed to the outside of the first end plate 510 described below, and the end plate 500 may be provided with a terminal busbar opening 520 for this purpose.

The terminal busbar 340 may further include a protrusion part protruding from the outer surface of the first sealing cover 420. The protrusion part may be exposed to the outside of the battery assembly 100 through the terminal busbar opening 520 described below. The terminal busbar 340 may be connected to another battery assembly 100 or a BDU (Battery Disconnect Unit) through the protrusion part exposed through the terminal busbar opening 520, thereby forming an HV (High voltage) connection.

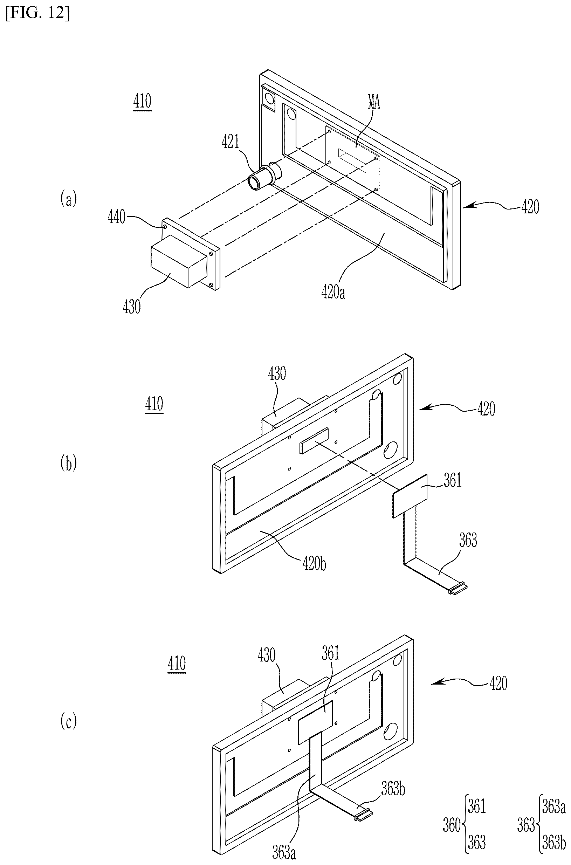

FIGS. 12 (a), (b) and (c) are diagrams showing a process in which the first sealing assembly of FIG. 11 is assembled.

Referring to FIG. 3, FIG. 11, and FIG. 12(a), (b), and (c), a module connector 430 is mounted on one surface of the first sealing assembly 410, and a sensing unit 360 is mounted on the other surface of the first sealing assembly 410, so that the module connector 430 and the sensing unit 360 can be electrically connected to each other. Specifically, the module connector 430 can be mounted on the outer surface 420a of the first sealing cover 420. The outer surface 420a of the first sealing cover 420 is a surface facing the first end plate 510, and may be the opposite surface of the surface facing the first busbar assembly 300a.

Referring to FIG. 12(a), the module connector 430 can be mounted and positioned in a mounting area MA, which is one area of the outer surface 420a of the first sealing cover 420. The mounting area MA is one area corresponding to the size of the module connector 430, wherein a hole passing through the first sealing cover 420 is provided in the center portion of the mounting area MA, and a groove in which a coupling member 440 may be mounted can be provided at the vertex of the mounting area MA. In this case, a coupling member 440 may be provided at the vertex of the module connector 430, and the coupling member 440 may be positioned in an area corresponding to the groove of the mounting area MA. Therefore, the coupling member 440 may be coupled with the groove of the mounting area MA, so that the module connector 430 can be mounted in the mounting area MA.

The coupling member 440 may be used without limitation as long as it can couple and fix the module connector 430 to the mounting area MA, and may be, for example, a bolt, a nut or a rivet.

Referring to FIG. 12(b) and (c), a sensing unit 360 may be mounted on one surface of the first sealing cover 420. Specifically, the sensing unit 360 may be mounted on the inner surface 420b of the first sealing cover 420. The inner surface 420b of the first sealing cover 420 may be a surface facing the first busbar assembly 300a, and may be the opposite surface of the surface facing the first end plate 510.

The sensing unit 360 may include a sensing printed circuit board 361 and a sensing cable 363 electrically connected to the sensing printed circuit board 361. The sensing printed circuit board 361 may be electrically connected to the module connector 430. The sensing printed circuit board 361 may be positioned in one area corresponding to the module connector 430. Specifically, the sensing printed circuit board 361 may be positioned in the mounting area MA. The sensing printed circuit board 361 may be positioned while being electrically connected to the module connector 430 through a hole in the mounting area MA.

The sensing cable 363 is a cable electrically connected to the sensing printed circuit board 361, and may include a cable connection part 363a and a cable extension part 363b.

The cable connection part 363a may be connected to the sensing printed circuit board 361, and positioned while making contact with the inner surface 420b of the first sealing cover 420. The cable connection part 363a may be fixed while making contact with the inner surface 420b of the first sealing cover 420, and does not move arbitrarily within the battery assembly 100, which does not cause damage to the components.

Specifically, the cable connection part 363a extends from the sensing printed circuit board 361 to the lower part of the first sealing cover 420, and may be bent and extended from the lower part of the first sealing cover 420. At this time, a portion that is extended while being bending from the cable connection part 363a at the lower part of the first sealing cover 420 may be defined as a cable extension part 363b. The cable extension part 363b may be electrically connected to the first flexible printed circuit board 350 that is positioned in the busbar assembly.

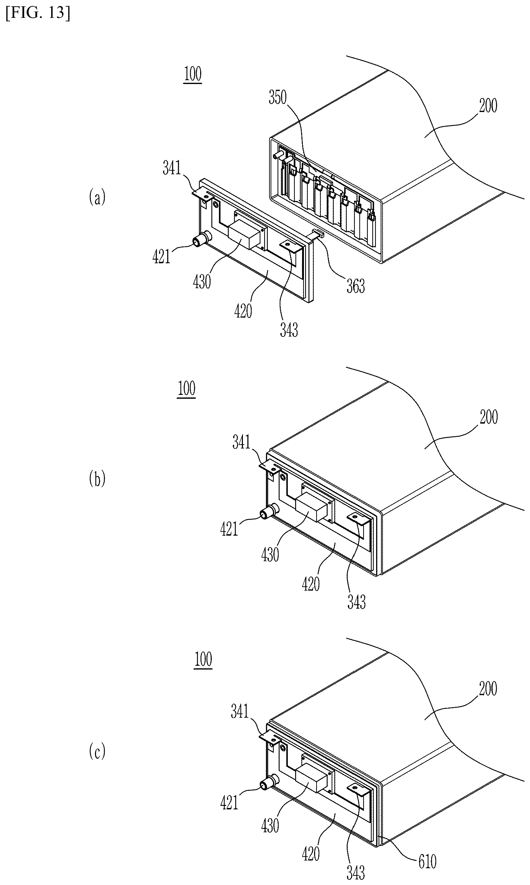

FIGS. 13(a), (b) and (c) are diagrams showing a process in which the first sealing assembly of FIG. 11 is mounted on one surface of a frame.

Referring to FIG. 12(c) and FIG. 13(a) together, the sensing cable 363 can be electrically connected to the first flexible printed circuit board 350. In this case, the sensing cable 363 can transmit voltage information and temperature information of the battery cell obtained from the flexible printed circuit board 350 to the sensing printed circuit board 361. In this case, the sensing printed circuit board 361 can transmit the information obtained from the flexible printed circuit board 350 to the module connector 430. That is, the sensing unit 360 can transmit data of the battery cell acquired from the flexible printed circuit board 350 to the module connector 430.

Therefore, the module connector 430 can transmit data acquired from the flexible printed circuit board 350 and the sensing unit 360 to the BMS (Battery Management System), wherein the BMS can control the charging/discharging of the battery cells based on the collected voltage data.

Referring to FIG. 3 and FIGS. 13(a) and (b), the first sealing cover 420 can be mounted on the frame 200 while covering the opened side of the frame 200. As an example, the first sealing cover 420 can be fitted into the frame 200. In this case, the edge of the first sealing cover 420 may include a protrusion part that partially protrudes toward the direction (-X axis direction) of coupling with the frame 200. The edge of the frame 200 that is coupled with the first sealing cover 420 can have a step formed so that the edge protrusion part of the first sealing cover 420 can be fitted. Thus, the first sealing cover 420 and the frame 200 can be fitted together.

Referring to FIG. 13(c), when the first sealing cover 420 is coupled to the opened side of the frame 200, the first sealing member 610 may be interposed along the edge of the first sealing cover 420 and the frame 200. When the first sealing cover 420 and the frame 200 are coupled, a minute gap may be formed between them due to the assembly tolerance, which may be sealed with the first sealing member 610 to improve the sealing performance of the battery assembly 100. Therefore, leakage of the coolant positioned inside the battery assembly 100 can be prevented, leakage of the gas generated inside the battery assembly 100 can be prevented, and the direction of the gas discharge can be also controlled, so that the safety of the battery assembly 100 can be improved. In this case, the first sealing member 610 may be, for example, an adhesive tape.

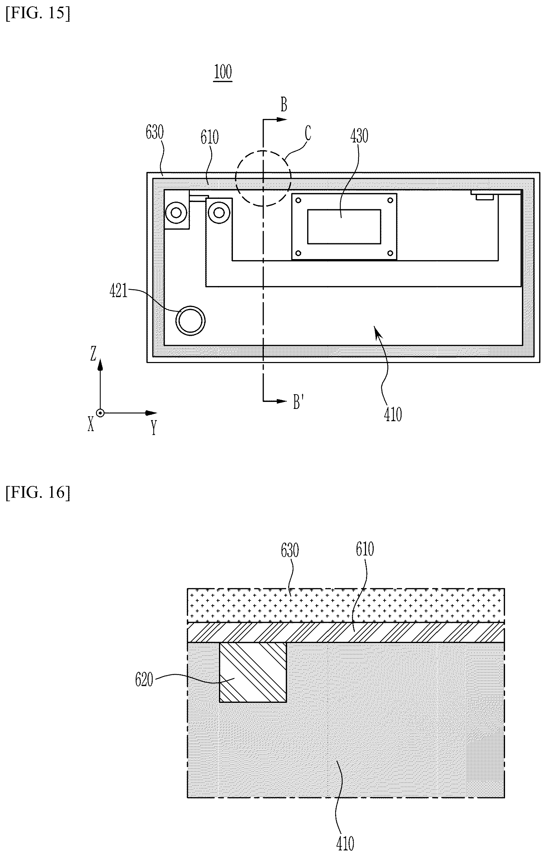

Although not specifically shown in the figure, the first sealing assembly 410 is coupled to the frame 200, the edge is sealed with the first sealing member 610, and then other gaps existing in the first sealing assembly 410 can be sealed with the second sealing member 620 (see FIG. 16). This ensures that the second sealing member 620 is used to seal the portion other than the edge of the first sealing assembly 410 that cannot be sealed with the first sealing member 610, thereby further improving the sealing performance of the battery assembly 100. The second sealing member 620 will be described in more detail in FIG. 16.

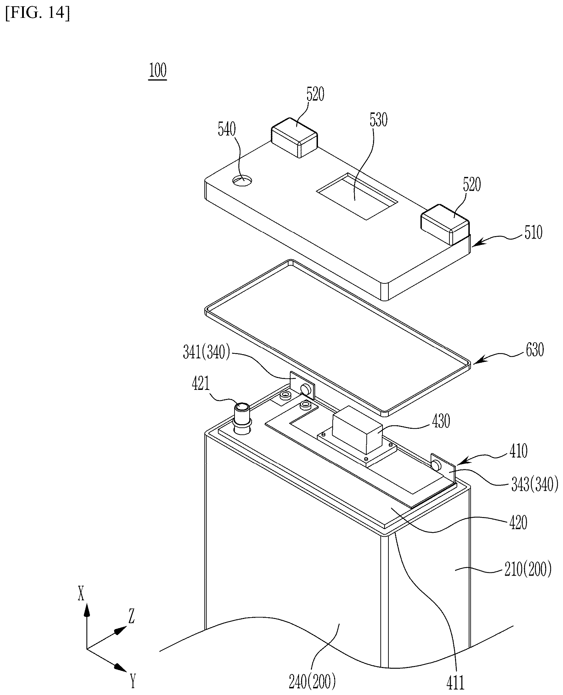

FIG. 14 is an exploded perspective view showing a state in which a first end plate according to certain embodiments of the present disclosure is mounted on the first sealing assembly.

Referring to FIGS. 11, 13 and 14, in the battery assembly 100 according to certain embodiments of the present disclosure, the first end plate 510 may be positioned to cover the first sealing assembly 410. A terminal busbar opening 520, a module connector opening 530, and an inlet opening 540 may be formed in the first end plate 510.

The terminal busbar opening 520 may be an opening formed in an area corresponding to the position of the terminal busbar 340 provided in the first sealing assembly 410. The terminal busbar opening 520 has the form that protrudes from the first end plate 510 toward the outside of the battery assembly 100, and only the upper surface of this protruding form may be opened. A part of the terminal busbar 340 may be exposed to the outside through this opened portion.

The size of the terminal busbar opening 520 can be determined mainly by the circumference size of the terminal busbar 340. However, for ease of assembly or for manufacturing process reasons, the size of the terminal busbar opening 520 may be larger than the size of the exposed portion of the terminal busbar 340. In this case, a gap may occur between the terminal busbar opening 520 and the terminal busbar 340 exposed to the outside.

The module connector opening 530 and the inlet opening 540 are openings provided in the first end plate 510, which are holes passing through the first end plate 510. Specifically, the module connector opening 530 may be an opening formed in an area corresponding to the position of the module connector 430 provided in the first sealing assembly 410, and the inlet opening 540 may be an opening formed in an area corresponding to the position of the inlet 421 provided in the first sealing assembly 410. Thereby, even when the first end plate 510 is mounted, at least a part of the module connector 430 and the inlet 421 may pass through the module connector opening 530 and the inlet opening 540, respectively, thereby being exposed to the outside.

The size of the module connector opening 530 and the inlet opening 540 can be determined by the circumferential size of the module connector 430 and the inlet 421. However, for ease of assembly or for the manufacturing process reasons, the size of the module connector opening 530 and the inlet opening 540 may be larger than the size of the exposed portion of the module connector 430 and the inlet 421. At this time, a gap can occur between the module connector opening 530 and the exposed portion of the module connector 430 and between the inlet opening 540 and the exposed portion of the inlet 421.

The terminal busbar 340 and the module connector 430 are exposed to the outside through the terminal busbar opening 520 and the module connector opening 530, so that HV connection and LV connection with external electrical components can be easily performed. Therefore, the efficiency of the assembly process can be improved.

Since the inlet 421 is exposed to the outside of the battery assembly 100 through the inlet opening 540, so that when the coolant flows in through the inlet 421, the coolant can be prevented from leaking between the first sealing assembly 410 and the first end plate 510. Therefore, the coolant may not make contact with the terminal busbar 340 or the module connector 430 that performs electrical connection with the outside. That is, it is possible to prevent a short circuit between the components and thus improve the safety of the battery assembly 100.

A third sealing member 630 may be interposed between the first end plate 510 and the first sealing assembly 410. The third sealing member 630 may have a shape corresponding to the edge of the first sealing assembly 410 or the edge of the first end plate 510. The third sealing member 630 may be a resin that is cured after being applied to correspond to the edge of the first sealing assembly 410 or the edge of the first end plate 510. Specifically, the third sealing member 630 may be applied to the first groove 411, which is a groove formed along the edge of the first sealing assembly 410, and may be cured after the first sealing assembly 410 and the first end plate 510 are coupled. As an example, the third sealing member 630 may include an epoxy resin.

That is, the third sealing member 630 is interposed between the first sealing assembly 410 and the first end plate 510, so that the first sealing assembly 410 and the first end plate 510 can be coupled and sealed without any gap formed due to an assembly tolerance. Therefore, the sealing performance of the battery assembly 100 is improved, and leakage of the coolant positioned within the battery assembly 100 is prevented, thereby improving the cooling performance of the battery assembly 100. In addition, the venting direction can be adjusted while preventing the venting gas generated within the battery assembly 100 at a certain temperature and pressure or higher from being discharged to the outside through the gap, thereby improving the safety of the battery assembly 100.

The type and formation method of the third sealing member 630 are not limited to those set forth above, and may be in the form of a gasket formed of an elastic member, and can be without limitation as long as they can perform the role of sealing the first sealing assembly 410 and the first end plate 510.

FIG. 15 is a diagram showing a configuration excluding the first end plate in FIG. 14, when viewed along the -x-axis direction on the yz plane. FIG. 16 is a partially enlarged cross-sectional view showing a portion corresponding to a section "C" in the cross section taken along the cutting line B-B' of FIG. 15.

Referring to FIGS. 14 to 16, the first sealing member 610 and the third sealing member 630 are positioned along the edge of the first sealing assembly 410, and the second sealing member 620 may be positioned in one area of the first sealing assembly 410.

Referring to FIG. 26 in relation to the second sealing member 620, the second sealing member 620 may be positioned in one area excluding the edge area of the first sealing assembly 410. That is, the second sealing member 620 may seal the remaining area of the first sealing assembly 410 that is not covered by the first sealing member 610 and the third sealing member 630. Specifically, the second sealing member 620 may seal an area in which a gap exists in the first sealing assembly 410. However, the area in which the second sealing member 620 is positioned is not limited to the area shown in the figure. For example, the second sealing member 620 may seal a portion in which a gap exists in one area of the first sealing assembly 410 where the module connector 430 is coupled.

In addition to the edge portion of the first sealing assembly 410, the portion where the gap is further positioned is sealed by the second sealing member 620, so that the sealing performance of the battery assembly 100 is improved, thereby preventing leakage of the coolant positioned inside the battery assembly 100. Therefore, the cooling performance of the battery assembly 100 can be improved. In addition, the gas generated inside the battery assembly 100 at certain temperature and pressure or higher is not discharged through a gap between the first sealing assembly 410 and the first end plate 510, thereby improving the safety of the battery assembly 100.

FIG. 17 is a diagram showing a state in which a second sealing assembly according to certain embodiments of the present disclosure is mounted on the other surface of the frame.

Referring to FIGS. 2, 3, 6 and 17, a second busbar assembly 300b may be positioned on the other side of the battery cell stack 120 as mentioned above.

The second busbar assembly 300b may include a second busbar frame 310b and a second busbar 330b mounted on the second busbar frame 310b.

The second busbar frame 310b may be positioned on the other surface of the battery cell stack 120 to cover the other surface of the battery cell stack 120 and at the same time, guide the connection between the battery cell stack 120 and an external device.

The second busbar 330b may be mounted on the second busbar frame 310b. In specific examples, the inner surface of the second busbar frame 310b may face the battery cell stack 120, and a second busbar 330b may be mounted on the outer surface of the second busbar frame 310b.

The second busbar frame 310b may include an electrically insulating material. The second busbar frame 310b restricts the second busbar 330b from contacting with other portions of the battery cells 110 other than the portion where the second busbar 330b is joined to the electrode lead (not shown), thereby preventing an electrical short from occurring. The second busbar 330b is mounted on the outer surface of the second busbar frame 310b, and may electrically connect the battery cells 110 included in the battery cell stack 120.

The second busbar 330b may be electrically connected to the battery cell stack 120 through the electrode lead 130 of the battery cell 110. Specifically, the electrode lead 130 of the battery cell 110 can be bent after passing through a slit formed in the second busbar frame 310b, and connected to the second busbar 330b. The battery cells 110 included in the battery cell stack 120 can be electrically connected in series or in parallel by the second busbar 330b. The connection method between the electrode lead 130 and the second busbar 330b are not particularly limited, and weld-joining may be applied as an example.

Meanwhile, the battery assembly 100 according to the present embodiments may include a second sealing assembly 450 mounted on the opened other side of the frame 200. The second sealing assembly 450 may be mounted while covering the second busbar assembly 300b.

The second sealing assembly 450 may include a second sealing cover 460, which is a plate covering the opened side of the frame 200, and an outlet 461, which is a hole formed in the second sealing cover 460.

The second sealing cover 460 is a plate that covers the opened other surface of the frame 200, and may have a size corresponding to the size of the opened other surface of the frame 200. That is, the second sealing cover 460 may be mounted on the frame 200 while covering the opened other surface of the frame 200. As an example, the second sealing cover 460 may be fitted with the frame 200.

The outlet 461 may be a hole formed in one area of the second sealing cover 460. The outlet 461 may be a hole that protrudes toward the outer surface (-X-axis direction) of the second sealing cover 460. That is, the outlet 461 may be a hole that protrudes in the opposite direction to the direction in which the frame 200 is positioned based on the second sealing cover 460. The outlet 461 having a protruding form may pass through the outlet opening 560 formed in the second end plate 550 described below.

The outlet 461 can be positioned higher than the center portion on the basis of the height of the battery cell stack 120. The outlet 461 may be positioned close to the upper end of the second sealing assembly 450. Specifically, the outlet 461 may be positioned higher than the center portion on the basis of the height of the second sealing assembly 450.

When the second sealing assembly 450 and the opened other surface of the frame 200 are joined to each other, a first sealing member 610 may be interposed along the edge of the second sealing cover 460 and the frame 200. When the second sealing cover 460 and the frame 200 are coupled, a minute gap may be formed between them due to the assembly tolerance, and this may be sealed with the first sealing member 610 to improve the sealing performance of the battery assembly 100. Therefore, leakage of the coolant positioned inside the battery assembly 100 can be prevented, leakage of the venting gas generated inside the battery assembly 100 can also be prevented, and the direction of the gas discharge can be controlled, thereby improving the safety of the battery assembly 100. In this case, the first sealing member 610 may be, for example, an adhesive tape.

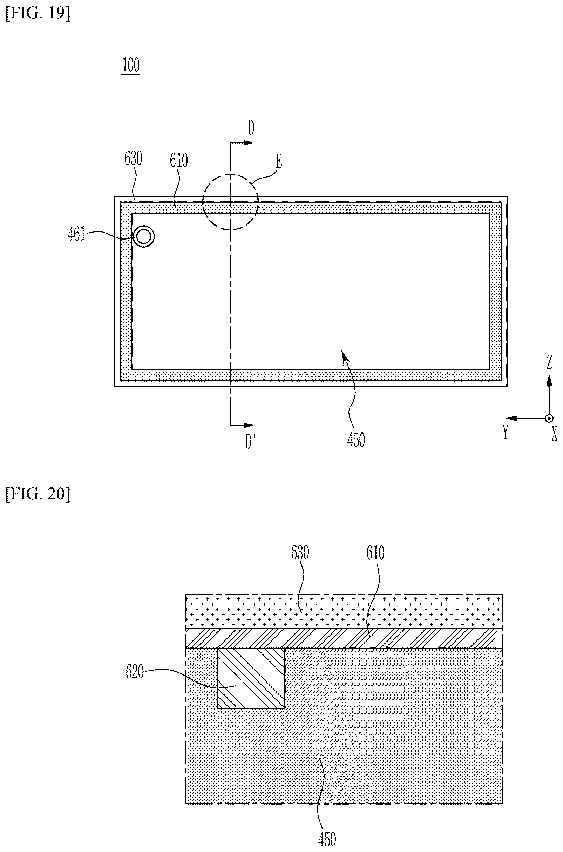

Although not specifically shown in the figure, the second sealing assembly 450 is coupled to the frame 200, the edge is sealed with the first sealing member 610, and then the gap existing on the second sealing assembly 450 can be sealed with the second sealing member 620 (see FIG. 20). This ensures that the second sealing member 620 is used to seal the portion other than the edge of the second sealing assembly 450 that cannot be sealed with the first sealing member 610, thereby further improving the sealing performance of the battery assembly 100. The second sealing member 620 will be described in more detail in FIG. 20.

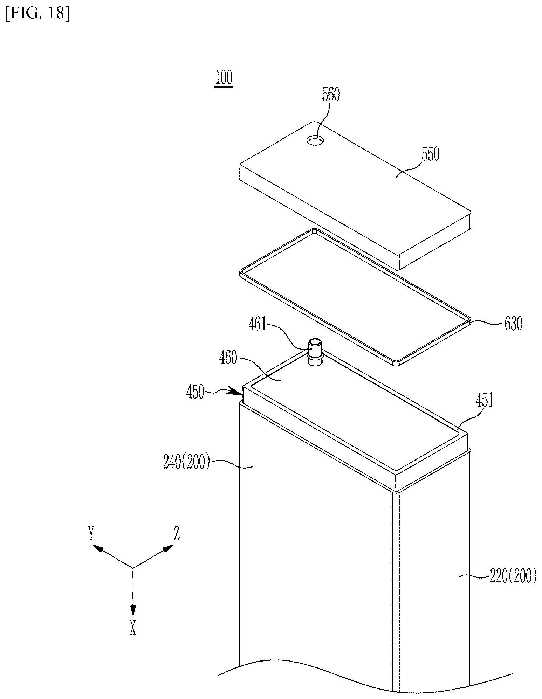

FIG. 18 is an exploded perspective view showing a state in which a second end plate according to certain embodiments of the present disclosure is mounted on the second sealing assembly.

Referring to FIG. 18, in the battery assembly 100 according to certain embodiments of the present disclosure, the second end plate 550 may be positioned to cover the second sealing assembly 450. The second end plate 550 may be formed with an outlet opening 560.

The outlet opening 560 is an opening provided in the second end plate 550, and is a hole passing through the second end plate 550. Specifically, the outlet opening 560 may be an opening formed in an area corresponding to the position of an outlet 461 provided in the second sealing assembly 450. Thereby, even when the second end plate 550 is mounted, at least a part of the outlet 461 may pass through the outlet opening 560 and be exposed to the outside.

The dimension of the outlet opening 560 may be determined mainly by the circumference size of the outlet 461. However, for ease of assembly or for manufacturing process reasons, the size of the outlet opening 560 can be larger than the size of the exposed portion of the outlet 461. In this case, a gap can occur between the outlets 461 exposed to the outside of the outlet opening 560.

The outlet 461 is exposed to the outside of the battery assembly 100 through the outlet opening 560, so that when the coolant flowing into the frame 200 is discharged to the outside through the outlet 461, the coolant can be prevented from leaking between the second sealing assembly 450 and the second end plate 550. Thus, it does not make contact with other electrical components, so that the occurrence of a short circuit can be prevented, and the safety of the battery assembly 100 can be improved.

A third sealing member 630 may be interposed between the second end plate 550 and the second sealing assembly 450. The third sealing member 630 may have the shape corresponding to the edge of the second sealing assembly 450 or the edge of the second end plate 550. The third sealing member 630 may be a resin that is cured after being applied to correspond to the edge of the second sealing assembly 450 or the edge of the second end plate 550. Specifically, the third sealing member 630 may be applied to a second groove 451 formed along the edge of the second sealing assembly 450, and may be cured after the second sealing assembly 450 and the second end plate 550 are coupled. As an example, the third sealing member 630 may include an epoxy resin.

That is, the third sealing member 630 is interposed between the second sealing assembly 450 and the second end plate 550, so that the second sealing assembly 450 and the second end plate 550 can be coupled and sealed without any gap formed due to assembly tolerance. Therefore, the sealing performance of the battery assembly 100 is improved, and leakage of the coolant positioned within the battery assembly 100 is prevented, thereby improving the cooling performance of the battery assembly 100. In addition, the venting direction can be adjusted while preventing the venting gas generated within the battery assembly 100 at a certain temperature and pressure or higher from being discharged to the outside through the gap, thereby improving the safety of the battery assembly 100.

The type and formation method of the third sealing member 630 are not limited to those set forth above, and may be in the form of a gasket formed of an elastic member, and can be used without limitation as long as they can perform the role of sealing the second sealing assembly 450 and the second end plate 550.

FIG. 19 is a diagram showing a configuration excluding the second end plate in FIG. 18, when viewed along the x-axis direction on the yz plane. FIG. 20 is a partially enlarged cross-sectional view showing a portion corresponding to a section "E" in the cross section taken along the cutting line D-D' of FIG. 19.

Referring to FIGS. 18 to 20, the first sealing member 610 and the third sealing member 630 may be positioned along the edge of the second sealing assembly 450, and the second sealing member 620 may be positioned in one area of the second sealing assembly 450.

Referring to FIG. 20 in relation to the second sealing member 620, the second sealing member 620 may be positioned in one area excluding the edge area of the second sealing assembly 450. That is, the second sealing member 620 may seal the remaining area of the second sealing assembly 450 that is covered by the first sealing member 610 and the third sealing member 630. Specifically, the second sealing member 620 may seal one area in the first sealing assembly 410 where a gap exists. However, the area where the second sealing member 620 is positioned is not limited to the area shown in this figure.

In addition to the edge portion of the second sealing assembly 450, the portion where the gap is further positioned is sealed by the second sealing member 620, so that the sealing performance of the battery assembly 100 is improved, thereby preventing leakage of the coolant positioned inside the battery assembly 100. Therefore, the cooling performance of the battery assembly 100 can be improved. In addition, the gas generated inside the battery assembly 100 at certain temperature and pressure or higher is not discharged through a gap between the second sealing assembly 450 and the second end plate 550, thereby improving the safety of the battery assembly 100.

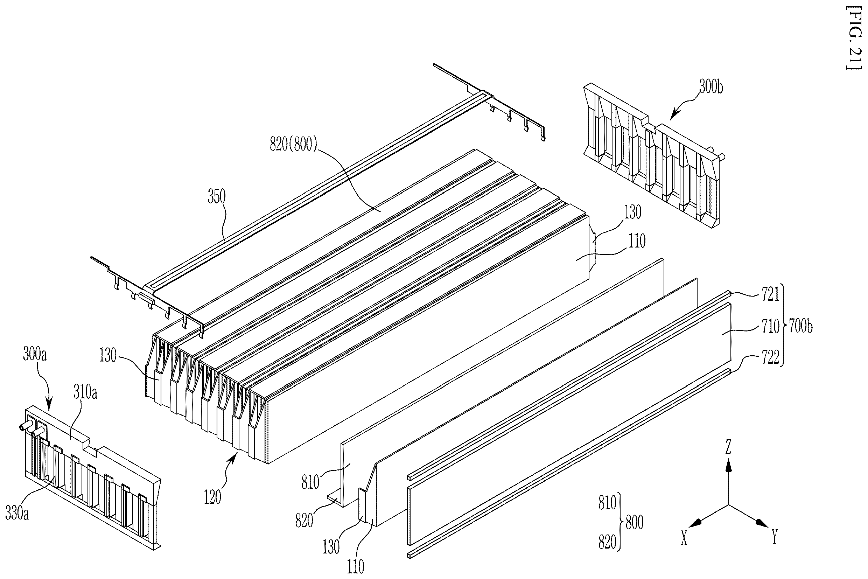

Next, a battery assembly according to modified embodiments of the present disclosure will be described in detail with reference to FIGS. 21 to 23.

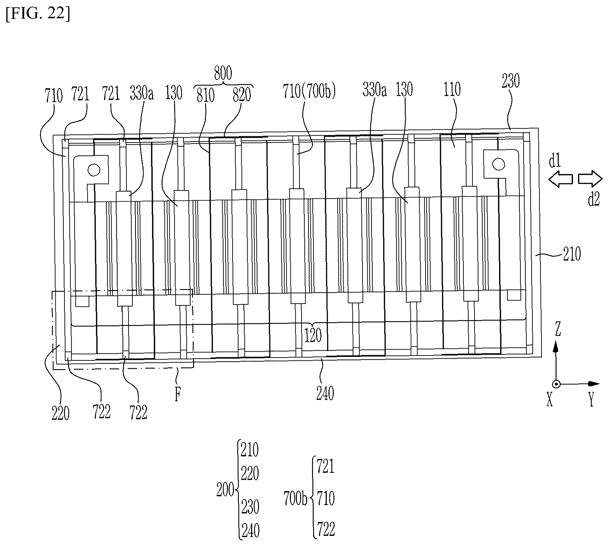

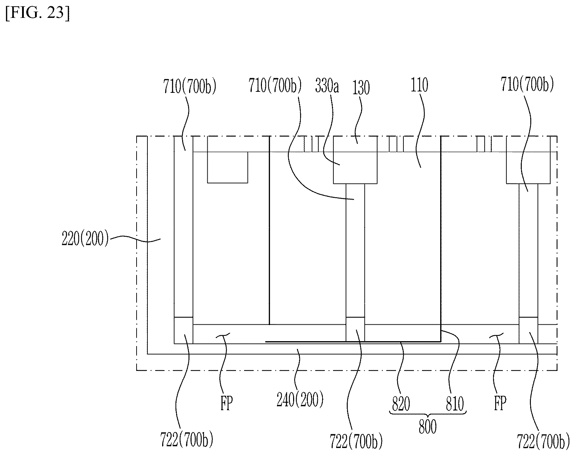

FIG. 21 is an exploded perspective view of a battery cell stack, a first busbar assembly and a second busbar assembly according to modified embodiments of the present disclosure. FIG. 22 is a front view showing a state in which the first end plate and the first busbar frame are removed in a battery assembly according to modified embodiments of the present disclosure, when viewed from the front. FIG. 23 is a partially enlarged diagram showing a section "F" of FIG. 22.

Referring to FIGS. 21 to 23, a battery assembly according to modified embodiments of the present disclosure includes a battery cell stack 120 in which a plurality of battery cells 110 are stacked, and a frame 200 that houses the battery cell stack 120 and includes a first side surface part 210, a second side surface part 220, a ceiling part 230, and a bottom part 240. In addition, although not specifically shown in the figure, the battery assembly according to the modified embodiments may include an inlet and an outlet, and may also include a first busbar assembly 300a, a second busbar assembly 300b, a flexible printed circuit board 350, and the like. That is, the battery assembly according to the present embodiments may have a structure identical or similar to the battery assembly described above in FIGS. 2 to 6, except for the pad member 700b described below.

In certain embodiments, the pad members 700b are disposed on at least one place between the battery cells 110, and at least one of the pad members 700b extends from the ceiling part 230 to the bottom part 240 of the frame 200.

However, the pad member 700b according to the present embodiments may include a main pad 710 facing one surface of the battery cell 110; a first vane 721 sandwiched between the main pad 710 and the ceiling part 230 of the frame 200; and a second vane 722 sandwiched between the main pad 710 and the bottom part 240 of the frame 200.

The main pad 710 is intended to absorb the swelling phenomenon of the battery cell 110, and the material thereof is not particularly limited, but may include a polyurethane material as an example. The first vane 721 and the second vane 722 are not limited in its material, but may include the same material as the main pad 710. Unlike the pad member 700a which is a single pad, the pad member 700b according to the present embodiments disposes the first vane 721 and the second vane 722 above and below the main pad 710, thereby forming coolant flow paths FP that are separated from each other between the pad members 700b. That is, the pad member 700b according to the present embodiments is divided into a plurality of members, but the overall shape is the same as the pad member 700a described above, so that the function of forming the coolant flow path FP and eliminating stagnation of the coolant flow and the cooling imbalance resulting therefrom can be performed in the same manner.

Even if the height of the battery cell 110 or the height of the frame 200 is changed, in the case of the pad member 700b according to the present embodiments, the main pad 710 can be used as it is by changing the first vane 721 and the second vane 722 in accordance with the changed height dimensions. That is, the embodiments of the present pad member 700b may be more advantageous in terms of the manufacturing process than the previous embodiments in which the entire pad member 700a must be replaced.

In the embodiments above, expressions indicating directions such as "front," "rear," "left," "right," "up," and "down" have been used. These expressions are used only to facilitate the description, and may vary, for example, depending on the location of a target object or an observer.

One or more battery assemblies according to certain embodiments of the present disclosure themselves can be directly mounted on a vehicle or chassis. That is, in the case of the battery assembly 100 according to the present embodiments, it can be directly mounted on a vehicle or chassis in a state where the battery cells 110 is housed in the frame 200.

As another example, the battery assemblies may be mounted together with various control and protection systems such as a battery management system (BMS), a battery disconnect unit (BDU), and a cooling system, to form a battery pack.

The battery assemblies of the present disclosure may be applied to various devices, which include, for example, transportation vehicles such as electric bicycles, electric vehicles, and hybrids, and energy storage systems (ESS). However, without being limited thereto, the battery assemblies or the battery pack may be applied to various devices using secondary batteries.

Although the present disclosure has been illustrated and described above with reference to preferred embodiments thereof, the technical scope of the present disclosure is not limited to the embodiments, and also includes various modifications and variations made by one of ordinary skill in the art using the concepts defined in the claims attached therewith.

### [Description of Reference Numerals]

100: battery assembly
110: battery cell
120: battery cell stack
200: frame
210: first side surface part
220: second side surface part
230: ceiling part
240: bottom part
300a: first busbar assembly
300b: second busbar assembly
421: inlet
461: outlet
700a, 700b: pad member
710: main pad
721: first vane
722: second vane

## Claims

1. A battery assembly comprising:
a battery cell stack in which a plurality of battery cells are stacked;
a frame that houses the battery cell stack and includes a first side surface part, a second side surface part, a ceiling part, and a bottom part; and
an inlet and an outlet for circulating a coolant inside the frame,
wherein the coolant is flowed into the inside of the frame through the inlet, and discharged through the outlet,
wherein pad members are disposed on at least at one place between the battery cells, and
wherein at least one of the pad members extends from the ceiling part to the bottom part of the frame.

2. The battery assembly according to claim 1,
wherein flow paths for the coolant separated from each other are formed between the pad members.

3. The battery assembly according to claim 1,
wherein at least one upper end of the pad members is in close contact with the ceiling part, and at least one lower end of the pad members is in close contact with the bottom part.

4. The battery assembly according to claim 1,
wherein the pad member has a configuration in which a single pad extends from the ceiling part to the bottom part of the frame.

5. The battery assembly according to claim 1,
wherein the pad member comprises a main pad facing one surface of the battery cell, a first vane sandwiched between the main pad and the ceiling part of the frame, and a second vane sandwiched between the main pad and the bottom part of the frame.

6. The battery assembly according to claim 1,
wherein the inlet and the outlet are positioned on sides opposite to each other with respect to the battery cell stack.

7. The battery assembly according to claim 1,
further comprising a first end plate and a second end plate that cover opened one side and other side of the frame, respectively.

8. The battery assembly according to claim 7,
wherein the inlet is provided in the first end plate, and
the outlet is provided in the second end plate.

9. The battery assembly according to claim 1,
wherein the inlet is positioned lower than the center portion on the basis of the height of the battery cell stack, and
the outlet is positioned higher than the center portion on the basis of the height of the battery cell stack.

10. The battery assembly according to claim 1,
wherein in a first direction and a second direction which are opposite to each other while being parallel to the direction in which the battery cells are stacked,
the inlet is positioned so as to be biased in the first direction from the center portion of the battery cell stack in the direction in which the battery cells are stacked, and
the outlet is positioned so as to be biased in the second direction from the center portion of the battery cell stack in the direction in which the battery cells are stacked.

11. The battery assembly according to claim 1,
wherein in the battery cell stack, the battery cells are stacked along a direction from the first side surface part of the frame to the second side surface part of the frame.

12. The battery assembly according to claim 1,
wherein the battery cells are stacked in a state where one surface of the battery cell is parallel to the first side surface part and the second side surface part.

13. The battery assembly according to claim 1,
wherein the coolant is an insulating oil.

14. The battery assembly according to claim 1,
wherein the coolant cools while being in direct contact with the battery cell stack housed inside the frame.

15. The battery assembly according to claim 1,
wherein the pad member is provided in a plurality of numbers, and
the plurality of pad members are disposed at prescribed intervals along the direction in which the battery cells are stacked.

16. The battery assembly according to claim 1,
wherein the pad member is further disposed between the battery cell stack and the first side surface part.

17. The battery assembly according to claim 1,
wherein the pad member is further disposed between the battery cell stack and the second side surface part.

18. The battery assembly according to claim 1,
further comprising cooling fins positioned between the battery cells,
wherein the cooling fins extend to the ceiling part or the bottom part and is contact with the ceiling part or the bottom part.

19. A device comprising the battery assembly according to claim 1.
